# EUROPÄISCHE PATENTSCHRIFT

(11) **EP 1 650 994 B1**
(45) Veröffentlichungstag und Bekanntmachung des Hinweises auf die Patenterteilung: **26.06.2013**
(21) Anmeldenummer: 05021164.8
(22) Anmeldetag: 28.09.2005
(51) Int. Cl.: H04W 12/00

(54) **Gegen Angriffe aus unsicheren Netzwerken gesicherte Mobilstation und entsprechende Teilnehmerkarte**
Mobile station and subscriber card secured against attacs from unsecure networks
Station mobile et carte d'abonné sécurisé contre attaques d'un reseaux non sécurisé

(30) Priorität: 21.10.2004 DE 102004051308
(43) Veröffentlichungstag der Anmeldung: 26.04.2006
(73) Patentinhaber: Giesecke & Devrient GmbH, 81677 München (DE)
(72) Erfinder: Rankl, Wolfgang, 81825 München (DE); Horak, Monika Dr., 85716 Unterschleissheim (DE)

(56) Entgegenhaltungen:
- EP-A- 1 420 600
- WO-A-02/071774
- WO-A-03/054719
- WO-A1-03/065654

## Beschreibung

Die Erfindung betrifft eine Mobilstation mit einem mobilen Endgerät und einer Teilnehmerkarte, bei der ein Schutz gegen Angriffe aus einem unsicheren Netzwerk (z.B. Internet) beim Empfang von Daten aus dem unsicheren Netzwerk vorgesehen ist, sowie eine entsprechende Teilnehmerkarte.

Unter einem mobilen Endgerät wird ein Gerät zum Nutzen eines Mobilfunksystems in Verbindung mit einer Teilnehmerkarte verstanden, z.B. ein Mobiltelefon, Smart Phone oder PDA (Personal Digital Assistant) mit Mobiltelefonfunktion. Herzstück der Teilnehmerkarte ist das Sicherheitsmodul, das Identitätsdaten enthält, wie beispielsweise die IMSI und den Authentisierungsschlüssel Ki, die für die Teilnehmerkarte und damit indirekt für den Nutzer der Teilnehmerkarte bzw. des damit betriebenen mobilen Endgeräts spezifisch sind. Im Zusammenhang mit der Erfindung wird die Einheit von mobilem Endgerät und Teilnehmerkarte als Mobilstation bezeichnet.

Mit einem Mobilfunksystem wird ein Gesamtsystem mit einem Mobilfunknetzwerk, einem Hintergrundsystem und einer Mehrzahl von Mobilstationen (aus Endgerät und Teilnehmerkarte) bezeichnet. Über das Mobilfunknetzwerk wird die drahtlose Kommunikation mittels der Mobilstation durchgeführt. Im Hintergrundsystem sind Identitätsdaten der Nutzer sämtlicher Mobilstationen bzw. Teilnehmerkarten registriert. Beim Betrieb eines mobilen Endgeräts mit Teilnehmerkarte in einem Mobilfunknetzwerk werden die Identitätsdaten im Sicherheitsmodul der Teilnehmerkarte dazu verwendet, die Mobilstation bzw. das mobile Endgerät bzw. die Teilnehmerkarte gegenüber dem Mobilfunknetzwerk oder dem Hintergrundsystem zu authentisieren.

Beispiele für Mobilfunksysteme sind GSM (Global System for Mobile Communications), UMTS (Universal Mobile Telecommunications System), IMT-2000 (International Mobile Communication 2000). Im GSM-Mobilfunksystem ist das Sicherheitsmodul als SIM (SIM = Subscriber Identity Module) bezeichnet, im UMTS-Mobilfunksystem als USIM (USIM = Universal SIM). Die Teilnehmerkarte wird in diesen Fällen häufig als SIM-Karte bzw. USIM-Karte bezeichnet.

Mittlerweile ist es mit mobilen Endgeräten möglich, Daten aus unterschiedlichen Netzwerken zu beziehen, die vom Mobilfunknetzwerk unterschiedlich sind. Beispielsweise können Daten aus dem Internet heruntergeladen werden. Im Gegensatz zum Mobilfunknetzwerk sind solche beliebigen Netzwerke in der Regel nicht vertrauenswürdig, da sie von einer anderen Instanz als dem Betreiber des Mobilfunksystems kontrolliert werden. Mit den Daten kann gefährliche Angreifer-Software gekoppelt sein, wie z.B. Computerviren oder Trojaner, die zwangsläufig mit angenommen wird, wenn die Daten angenommen werden. Im Zusammenhang mit der Erfindung ist mit einem unsicheren Netzwerk ein Netzwerk gemeint, das vom Mobilfunknetzwerk unterschiedlich ist, und über das eine andere Instanz als das Mobilfunksystem die Kontrolle ausübt.

Zum Schutz von mobilen Endgeräten gegen Angriffe aus unsicheren Netzwerken gibt es im Endgerät installierte Schutzsoftware wie z.B. persönliche Paketfilter (personal Firewalls) und Virenscanner. Da die Schutzsoftware frei zugänglich im mobilen Endgerät implementiert ist, ist auch sie Angriffen aus unsicheren Netzwerken ausgeliefert, ebenso wie sonstige Software und Daten im mobilen Endgerät oder in der Teilnehmerkarte, die durch die Schutzsoftware gesichert werden sollen.

Bei lokalen Computer-Netzwerken wie z.B. Firmennetzwerken ist zum Schutz des Computer-Netzwerks gegen Angriffe von außerhalb des Computer-Netzwerks häufig eine Software mit der Funktion eines Paketfilters (Firewall) vorgesehen. Bei einem solchen Paketfilter (Firewall) werden alle Datenpakete, die von außen an ein zu schützendes abgeschlossenes System eingehen, überprüft und bei Bedarf gefiltert und ggf. abgewiesen. Eine weitere Software mit der Funktion eines Schutzmechanismus für lokale Netzwerke ist ein sogenanntes Intrusion Detection System (IDS), das Angreifer-Software erkennen kann und ggf. abblockt.

Aus DE 103 00 897 A1 ist ein Verfahren zum Betreiben eines mobilen Endgeräts mit einer Teilnehmerkarte (Telekommunikationskarte) in einem Mobilfunksystem bekannt, bei dem beim Endgerät eingehende Anrufe mittels einer in der Teilnehmerkarte eingerichteten Prüffunktion gefiltert werden. Bei dem Verfahren können also beispielsweise bei einem GSM/UMTS-Mobiltelefon unerwünschte Anrufe mittels der SIM/ USIM-Karte ausgefiltert werden. Somit bietet DE 103 00 897 A1 ein Verfahren zum Filtern von Anrufen innerhalb des Mobilfunknetzwerks.

EP 1420 600 A1 beschreibt eine Mobilstation mit einer Teilnehmerkarte und einem Endgerät und einem im Endgerät implementierten Sicherheitsmodul mit einer Schutzeinrichtung zum Schutz der Mobilstation gegen Angriffe aus einem unsicheren Netzwerk (Mobiltelefonnetzwerk).

WO 03/065654 A1 beschreibt eine Mobilstation mit einer Schutzeinrichtung gegenüber Angriffen aus einem vom Mobiltelefonnetzwerk unterschiedlichen unsicheren Netzwerk (Internet), nach dem Oberbegriff von Anspruch 1.

Aufgabe der Erfindung ist es, eine Mobilstation mit einem mobilen Endgerät und einer Teilnehmerkarte zu schaffen, bei der ein sicherer und effizienter Schutz gegen Angriffe aus unsicheren Netzwerken (z.B. dem Internet), die vom Mobilfunksystem unterschiedlich sind, und die unter der Kontrolle einer anderen Instanz als des Mobilfunkbetreibers stehen, gewährt ist.

Die Aufgabe wird durch eine Mobilstation nach Anspruch 1 gelöst.

Die Mobilstation gemäß Anspruch 1 weist ein mobiles Endgerät und eine Teilnehmerkarte auf, die zum Betreiben des Endgeräts mit der Teilnehmerkarte in einem Mobilfunksystem eingerichtet sind. Erfindungsgemäß ist in dem Endgerät ein Sicherheitsmodul implementiert, das gegen Zugriffe von außerhalb des Mobilfunksystems blockiert ist. Das Sicherheitsmodul weist wiederum eine Schutzeinrichtung zum Schutz der Mobilstation gegen Angriffe aus einem vom Mobilfunknetzwerk unterschiedlichen unsicheren Netzwerk auf, mit welcher Schutzeinrichtung Daten, die aus dem unsicheren Netzwerk bei der Mobilstation eingehen, überprüfbar und in Abhängigkeit vom Prüfergebnis weiter behandelbar sind. Gemäß der Erfindung enthält das Endgerät Firmware. Die Firmware umfasst unterschiedliche Funktionalitäten, die in aller Regel nur durch das Endgerät selbst benötigt werden. Daher ist es nicht erforderlich, dass ein Zugriff auf die Firmware von außerhalb der Mobilstation möglich ist. Die Firmware hat, wie dies für Firmware üblich ist, die Eigenschaft, dass sie gegen Zugriffe von außerhalb der Mobilstation blockiert ist. Die Schutzeinrichtung ist somit so eingerichtet, dass eine Kommunikation zwischen dem Endgerät und dem Sicherheitsmodul nur unter Zwischenschaltung der Firmware des Endgeräts erfolgen kann. Die Firmware des Endgeräts übernimmt somit die Funktion eines zusätzlichen Filters gegen Daten mit Software-Angriffen aus unsicheren Netzwerken.

Dadurch, dass das Sicherheitsmodul und somit auch die Schutzeinrichtung gegen Zugriffe von außerhalb des Mobilfunksystems blockiert ist, ist die Schutzeinrichtung selbst gegen Angriffe geschützt. Daten, die aus unsicheren Netzwerken wie z.B. dem Internet in die Mobilstation gelangen, können nicht auf das Sicherheitsmodul zugreifen. Eine Überbrückung der Schutzeinrichtung durch eine missbräuchliche Manipulation der Schutzeinrichtung selbst ist daher verhindert.

Daher ist gemäß Anspruch 1 eine Mobilstation geschaffen, bei der ein sicherer und effizienter Schutz gegen Angriffe aus unsicheren Netzwerken (z.B. dem Internet), die vom Mobilfunksystem unterschiedlich sind, und die unter der Kontrolle einer anderen Instanz als des Mobilfunkbetreibers stehen, gewährt ist.

Bei der Mobilstation ist die Schutzeinrichtung wahlweise in der Teilnehmerkarte implementiert. In der Teilnehmerkarte ist als ein erstes, für die Mobiltelefonie vorgesehenes Sicherheitsmodul eine SIM oder USIM oder dergleichen implementiert. Durch das erfindungsgemäße Sicherheitsmodul mit der Schutzeinrichtung ist ein zweites Sicherheitsmodul innerhalb der Teilnehmerkarte gebildet.

Alternativ ist das erfindungsgemäße Sicherheitsmodul in einem von der Teilnehmerkarte gesonderten Datenträger (z.B. Smart Card) implementiert. Der Datenträger kann wieder lösbar oder fest im Endgerät implementiert sein. Ein lösbarer Datenträger kann z.B. auf ähnliche Weise wie die Teilnehmerkarte (z.B. (U)SIM-Karte) in einem gesonderten Lesegerät des Endgeräts vorgesehen sein, sofern das Endgerät zwei gesonderte Lesegeräte hat.

Wahlweise sind in dem Sicherheitsmodul weiter Filterregeln implementiert, mit denen durch die Schutzeinrichtung die Daten überprüfbar sind. Wahlweise sind die Filterregeln bearbeitbar, dabei wahlweise über die Luftschnittstelle des Mobilfunksystems. Das Bearbeiten kann insbesondere ein Nachladen von Filterregeln, ein Aktualisieren von Filterregeln, ein Löschen von Filterregeln und dergleichen umfassen.

Wahlweise sind mindestens zwei getrennte Sätze von Filterregeln für unterschiedliche Nutzer der Mobilstation in dem Sicherheitsmodul implementiert. Beispielsweise können für die Eltern Eltern-Filterregeln implementiert sein, die eine umfassendere Entgegennahme von Daten erlauben als Kind-Filterregeln, durch die die zulässige Entgegennahme von Daten durch Kinder der Eltern geregelt sind.

Die Daten sind wahlweise dahingehend bearbeitbar, dass vorbestimmte Daten abgewiesen werden. Insbesondere werden wahlweise Daten, die gegen Filterregeln verstoßen, abgewiesen.

Wahlweise ist bei der Mobilstation das Sicherheitsmodul zumindest teilweise als Software-Anwendung implementiert, insbesondere als Software-Anwendung in der Teilnehmerkarte (z.B. (U)SIM-Karte). Weiter kann insbesondere die Schutzeinrichtung als Software-Anwendung implementiert sein.

Die Schutzfunktion kann im Detail wahlweise nach Art eines Paketfilters (Firewall), Virenscanners oder Intrusion Detection Systems (IDS) gestaltet sein, oder mehrere der genannten Funktionalitäten aufweisen.

Als unsicheres Netzwerk kann wahlweise das Internet vorgesehen sein.

Alternativ oder zusätzlich kann als unsicheres Netzwerk ein kurzreichweitiges Funknetzwerk - wie insbesondere RFID (Radio Frequency Identification), NFC (Nearfield Communication), WLAN (Wireless Local Area Network) oder/und IRDA (Infrared Data Association) - vorgesehen sein.

Im folgenden wird die Erfindung an Hand von Ausführungsbeispielen und unter Bezugnahme auf die Zeichnung näher erläutert, in der zeigen:
- Fig. 1: ein Schaubild zur Veranschaulichung eines Eingangs von Daten aus einem unsicheren Netzwerk bei einer Mobilstation mit einem Mobiltelefon und einer SIM-Karte;
- Fig. 2: ein Schaubild zur Veranschaulichung der Filterung der Daten aus Fig. 1 durch eine Schutzeinrichtung, die als Software-Anwendung in der SIM-Karte aus Fig. 1 implementiert ist.

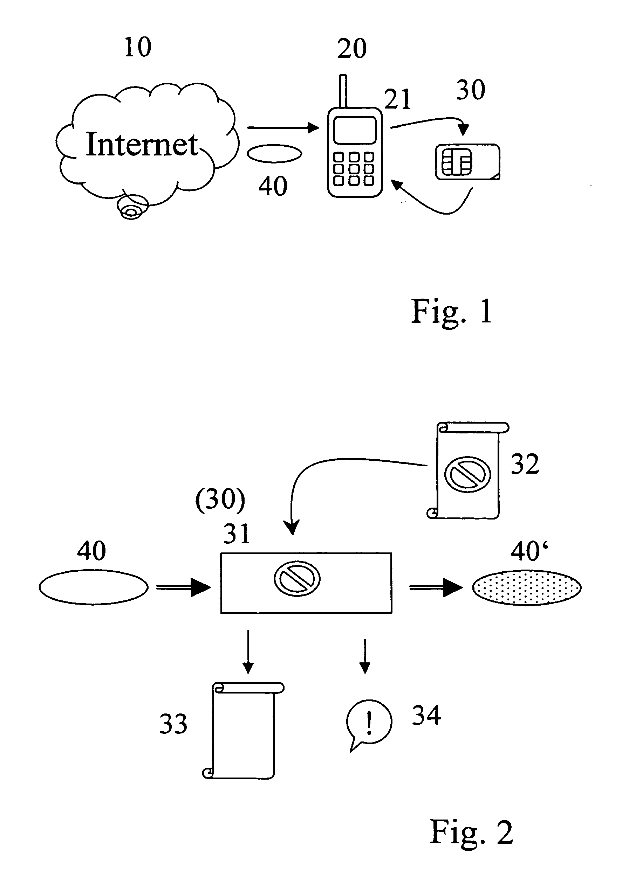

Fig. 1 zeigt schematisch ein unsicheres Netzwerk 10, hier beispielhaft das Internet, ein Mobiltelefon 20 und eine als SIM-Karte 30 gestaltete Teilnehmerkarte. Der Anschaulichkeit halber ist die SIM-Karte 30 außerhalb des Mobiltelefons 20 und vergrößert dargestellt. Tatsächlich wird die SIM-Karte 30 innerhalb des Mobiltelefons 20 betrieben. Mit dem Mobiltelefon 20 werden Daten 40 aus dem Netzwerk 10 heruntergeladen. Die Daten gelangen zuerst über eine Antenne des Mobiltelefons und eine daran angekoppelte Schaltung in das Mobiltelefon 20. Im Mobiltelefon 20 werden die Daten 40 von der im Mobiltelefon implementierten Firmware 21 in Empfang genommen und weiter verarbeitet. Da die Daten 40 durch die Firmware 21 verarbeitet werden, ist sichergestellt, dass die Daten 40 nur an zulässige Adressen innerhalb der Mobilstation weitergeleitet werden.

Das weitere Verfahren wird an Hand von Fig. 2 erläutert. Die Firmware 21 leitet die Daten an die SIM-Karte 30 weiter, und dort genauer an eine in der SIM-Karte implementierte Filter-Anwendung 31, durch die die erfindungsgemäße Schutzeinrichtung verwirklicht ist. Die Filter-Anwendung 31 verwendet Filterregeln 32, die ebenfalls in der SIM-Karte 30 implementiert sind, um die Daten 40 zu überprüfen und bei Bedarf zu filtern, d.h. nur höchstens teilweise durchzulassen. Die Filter-Anwendung 31 und die Filterregeln 32 sind in einem gesonderten Sicherheitsmodul in der SIM-Karte 30 implementiert, das vom eigentlichen SIM-Sicherheitsmodul, das für die Mobiltelefonie vorgesehen ist, getrennt ist. In Abhängigkeit von den Daten 40, der Filter-Anwendung 31 und den Filterregeln 32 werden von den Daten 40 solche Daten abgewiesenen, die gegen die Filterregeln 32 verstoßen. Den Filterregeln 32 genügende Daten werden als gefilterte Daten 40' durchgelassen. Wahlweise ist die Filter-Anwendung 31 dazu eingerichtet, dass sie ein Filterprotokoll 33 über durchgeführte Filterprozesse erstellt und ausgibt. Das Filterprotokoll 33 kann beispielsweise Informationen über die eingegangenen Daten 40, die gefilterten Daten 40', die ausgefilterten Daten, die durch sie verletzten Filterregeln 32 und dergleichen aufweisen. Wahlweise wird an den Nutzer des Mobiltelefons eine Benachrichtigung 34 ausgegeben. Die Benachrichtigung 34 kann beispielsweise eine Information enthalten, dass Daten ausgefiltert worden sind. Wahlweise enthält die Benachrichtigung 34 detaillierte Informationen, insbesondere alle oder einen Teil der Informationen aus dem Filterprotokoll 33.

## Patentansprüche

1. Mobilstation mit
- einem mobilen Endgerät (20) und einer Teilnehmerkarte (30), die zum Betreiben des Endgeräts (20) mit der Teilnehmerkarte (30) in einem Mobilfunksystem eingerichtet sind, und
- einem im Endgerät (20) implementierten, gegen Zugriffe von außerhalb des Mobilfunksystems blockierten Sicherheitsmodul mit einer Schutzeinrichtung (31) zum Schutz der Mobilstation gegen Angriffe aus einem vom Mobilfunknetzwerk unterschiedlichen unsicheren Netzwerk (10), mit welcher Schutzeinrichtung (31) Daten (40), die aus dem vom Mobilfunknetzwerk unterschiedlichen unsicheren Netzwerk (10) bei der Mobilstation eingehen, überprüfbar und in Abhängigkeit vom Prüfergebnis weiter behandelbar sind,
**dadurch gekennzeichnet, dass** das Endgerät (20) Firmware (21) enthält, die gegen Zugriffe von außerhalb des Mobilfunksystems blockiert ist, und wobei das Sicherheitsmodul so eingerichtet ist, dass eine Kommunikation zwischen dem Endgerät (20) und dem Sicherheitsmodul nur unter Zwischenschaltung der Firmware (21) des Endgeräts (20) erfolgen kann.

2. Mobilstation nach Anspruch 1, wobei das Sicherheitsmodul in der Teilnehmerkarte (30) implementiert ist.

3. Mobilstation nach Anspruch 1, wobei das Sicherheitsmodul in einem von der Teilnehmerkarte (30) gesonderten Datenträger implementiert ist, der wieder lösbar oder fest im Endgerät implementiert ist.

4. Mobilstation nach einem der Ansprüche 1 bis 3, wobei das Sicherheitsmodul zumindest teilweise, dabei insbesondere die Schutzeinrichtung (31), als Software-Anwendung implementiert ist.

5. Mobilstation nach einem der Ansprüche 1 bis 4, wobei in dem Sicherheitsmodul weiter Filterregeln (32) implementiert sind, mit denen durch die Schutzeinrichtung (31) die Daten (40) überprüfbar sind.

6. Mobilstation nach Anspruch 5, wobei die Filterregeln (32) bearbeitbar sind.

7. Mobilstation nach Anspruch 6, wobei die Filterregeln (32) über die Luftschnittstelle des Mobilfunksystems bearbeitbar sind.

8. Mobilstation nach einem der Ansprüche 5 bis 7, wobei mindestens zwei getrennte Sätze von Filterregeln (32) für unterschiedliche Nutzer der Mobilstation in dem Sicherheitsmodul implementiert sind.

9. Mobilstation nach einem der Ansprüche 1 bis 8, wobei die Daten (40) dahingehend bearbeitbar sind, dass vorbestimmte Daten (40) abgewiesen werden, insbesondere Daten (40), die gegen Filterregeln (32) verstoßen.

10. Mobilstation nach einem der Ansprüche 1 bis 9, wobei als unsicheres Netzwerk (10) das Internet vorgesehen ist.

11. Mobilstation nach einem der Ansprüche 1 bis 10, wobei als unsicheres Netzwerk (10) ein kurzreichweitiges Funknetzwerk - wie insbesondere RFID, WLAN oder/und IRDA - vorgesehen ist.

## Claims

1. A mobile station having
- a mobile terminal (20) and a subscriber card (30) which are adapted to operate the terminal (20) with the subscriber card (30) in a mobile communication system, and
- a security module that is implemented in the terminal (20) and blocked against accesses from outside the mobile communication system with a protecting device (31) for protection of the mobile station against attacks from an insecure network (10) that is different from the mobile communication network, by which protecting device (31) data (40) received by the mobile station from the insecure network (10) that is different from the mobile communication network can be checked and further handled in dependence on the result of the check,
**characterized in that** the terminal (20) contains firmware (21) that is blocked against accesses from outside the mobile communication system, and wherein the security module is so adapted that communication can take place between the terminal (20) and the security module only through the intermediary of the firmware (21) of the terminal (20).

2. The mobile station according to claim 1, wherein the security module is implemented in the subscriber card (30).

3. The mobile station according to claim 1, wherein the security module is implemented in a data carrier that is separate from the subscriber card (30) and is detachably or permanently implemented in the terminal.

4. The mobile station according to any of the claims 1 to 3, wherein the security module is implemented at least partly, therein particularly the protecting device (31), as a software application.

5. The mobile station according to any of the claims 1 to 4, wherein in the security module there are further implemented filter rules (32), with which the data (40) can be checked by the protecting device (31).

6. The mobile station according to claim 5, wherein the filter rules (32) are processable.

7. The mobile station according to claim 6, wherein the filter rules (32) are processable via the over-the-air interface of the mobile communication system.

8. The mobile station according to any of the claims 5 to 7, wherein at least two separate sets of filter rules (32) for different users of the mobile station are implemented in the security module.

9. The mobile station according to any of the claims 1 to 8, wherein the data (40) are processable in such a fashion that specified data (40) are rejected, in particular data (40) which violate filter rules (32).

10. The mobile station according to any of the claims 1 to 9, wherein as insecure network (10) there is provided the Internet.

11. The mobile station according to any of the claims 1 to 10, wherein as insecure network (10) there is provided a short-range mobile communication network - such as particularly RFID, WLAN and/ or IRDA.

## Revendications

1. Station mobile (20) comprenant
- un terminal mobile (20) et une carte d'usager (30) qui sont configurés pour exploiter le terminal (20) avec la carte d'usager (30) dans un système de radiocommunication mobile, et
- un module de sécurité implémenté dans le terminal (20), bloqué à l'encontre d'accès venant de l'extérieur du système de radiocommunication mobile et comportant un dispositif de protection (31) pour la protection de la station mobile contre des attaques provenant d'un réseau (10) non sûr différent du réseau de radiocommunication mobile, dispositif de protection (31) avec lequel des données (40) provenant du réseau (10) non sûr différent du réseau de radiocommunication mobile qui arrivent à la station mobile sont vérifiables et subséquemment traitables en fonction du résultat de la vérification,
**caractérisée en ce que** le terminal (20) contient du micrologiciel (21) qui est bloqué à l'encontre d'accès venant de l'extérieur du système de radiocommunication mobile, et le module de sécurité étant configuré de telle sorte qu'une communication entre le terminal (20) et le module de sécurité ne peut avoir lieu qu'avec connexion intermédiaire du micrologiciel (21) du terminal (20).

2. Station mobile selon la revendication 1, le module de sécurité étant implémenté dans la carte d'usager (30).

3. Station mobile selon la revendication 1, le module de sécurité étant implémenté dans un support de données qui est distinct de la carte d'usager (30) et est implémenté dans le terminal de manière amovible ou à demeure.

4. Station mobile selon une des revendications de 1 à 3, le module de sécurité étant au moins partiellement, en l'occurrence notamment le dispositif de protection (31), implémenté en tant qu'application de logiciel.

5. Station mobile selon une des revendications de 1 à 4, des règles de filtrage (32) avec lesquelles les données (40) sont vérifiables par le dispositif de protection (31) étant en outre implémentées dans le module de sécurité.

6. Station mobile selon la revendication 5, les règles de filtrage (32) étant traitables.

7. Station mobile selon la revendication 6, les règles de filtrage (32) étant traitables par l'intermédiaire de l'interface radio du système de radiocommunication mobile.

8. Station mobile selon une des revendications de 5 à 7, au moins deux lots séparés de règles de filtrage (32) pour différents utilisateurs de la station mobile étant implémentés dans le module de sécurité.

9. Station mobile selon une des revendications de 1 à 8, les données (40) étant traitables de façon à ce que des données (40) prédéterminées sont rejetées, notamment des données (40) qui enfreignent des règles de filtrage (32).

10. Station mobile selon une des revendications de 1 à 9, l'Internet étant prévu en tant que réseau (10) non sûr.

11. Station mobile selon une des revendications de 1 à 10, un réseau de radiocommunication à courte portée - tel que notamment RFID, WLAN ou/et IRDA étant prévu en tant que réseau (10) non sûr.
